# EUROPEAN PATENT APPLICATION

(11) **EP 2 731 026 A1**
(43) Date of publication of application: **14.05.2014**
(21) Application number: 13005212.9
(22) Date of filing: 05.11.2013
(51) Int. Cl.: G06F 17/30

(54) **Managing data within a cache**

(30) Priority: 09.11.2012 US 201213673570
(71) Applicant: SAP AG, 69190 Walldorf (DE)
(72) Inventor: Fabijancic, Toni, 69190 Walldorf (DE)
(74) Representative: Müller-Boré & Partner Patentanwälte PartG mbB

(57) **Abstract**

A system and method for managing data within a cache is described. In some example embodiments, the system identifies and/or tracks consumers of data located within a cache, and maintains the data within the cache based on determining whether there is an active consumer of the data.

## Description

### TECHNICAL FIELD

The subject matter disclosed herein generally relates to the processing of data, and more specifically, to managing data within a cache.

### BACKGROUND

A cache is a component that often acts as a second, temporary, storage location for data, such as data primarily located in a data archive that is temporarily associated with a data operation. For example, a system may store data in a cache in order to quickly provide the data in response to requests to perform operations with the data. Although the size of a cache is generally limited, due to costs and other factors, caching data during operations and other actions is an effective way to efficiently provide requested data to a system, due to locality of reference phenomena, among other things.

However, processing large amounts of data via a cache with limited memory space introduces a number of problems, such as large amounts of data competing for small amounts of cache memory. For example, a typical JOIN operation of multiple structures may perform more slowly than is acceptable, due to redundant access of archive files that store the multiple structures, among other drawbacks.

### BRIEF DESCRIPTION OF THE DRAWINGS

The present technology is illustrated by way of example, and not by way of limitation, in the figures of the accompanying drawings.

FIG. 1 is a network diagram illustrating a network environment for managing data within a cache, in some example embodiments.

FIG. 2 is a block diagram illustrating components of a cache manager configured to manage data within a cache, in some example embodiments.

FIG. 3 is a flow diagram illustrating a method for managing data objects located within a cache, in some example embodiments.

FIG. 4 is a flow diagram illustrating a method for performing actions associated with data located in a cache, in some example embodiments.

FIG. 5 is a block diagram illustrating components of a machine, according to some example embodiments, able to read instructions from a machine-readable medium and perform any one or more of the methodologies discussed herein.

### DETAILED DESCRIPTION

### Overview

A system and method for managing data within a cache is described. In some example embodiments, the system identifies and/or tracks consumers of data located within a cache, and maintains the data within the cache based on determining whether there is an active consumer of the data. For example, the system, via modules of a cache manager associated with the cache, may determine that there is no active consumer associated with a data object located within memory of a cache, and delete the data object from the cache based on the determination.

In some example embodiments, the system may also perform actions associated with data objects located within memory of a cache. For example, the system may perform a relational operation or other action between multiple structures of a data object within the memory of the cache. Once the operation is complete, the system may determine that there are no further consumers of the data object, and delete the data object from the cache.

The system, therefore, may intelligently determine when to maintain data objects within a cache, which enables the cache to provide its sometimes limited memory resources to the most relevant consumers and associated data objects, among other benefits. Furthermore, the system, in some example embodiments, may perform actions within memory of a cache without performing redundant data file accesses, enabling more efficient and quicker data operations, among other benefits.

In the following description, for purposes of explanation, numerous specific details are set forth to provide a thorough understanding of example embodiments. It will be evident to one skilled in the art, however, that the present subject matter may be practiced without these specific details.

### Example System

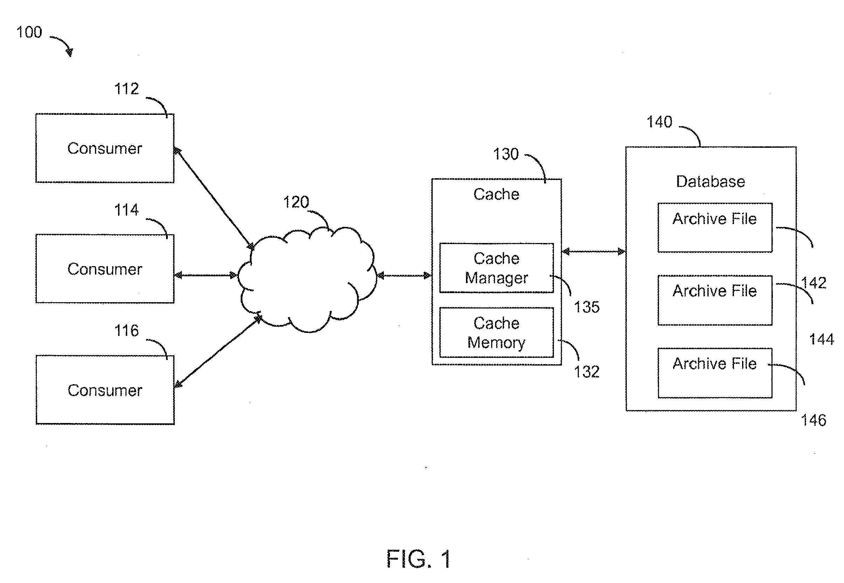

FIG. 1 is a network diagram illustrating a network environment 100 for managing data within a cache, in some example embodiments. The network environment 100 includes a cache 130, having memory 132 and a cache manager 135, which communicates with one or more consumers 112, 114, and 116 over a network 120. The cache 130 receives and stores data from archive files 142, 144, 146 located in a database 140 or other data storage component, such as a data archive. For example, the cache 130 may read data objects, business objects, other data structures such as an array, a record, a hash table, a union type, a set, a graph or a tree, or other groupings of data from one or more archive files into cache memory 132. Accordingly, each structure of an archive file 144 can be understood as one or more of the above-mentioned data structures, i.e. a data object, a business object, an array, a record, a hash table, a union type, a set, a graph, a tree or any other groupings of data. Moreover, within the whole description, each of the data structures listed above or any other groupings of data can be replaced with any other data structure listed above or any other groupings of data.

For example, when consumer 112 requests a data object located within archive file 144, the cache manager 135 accesses the archive file 144 via the database 140, and reads the archive file 144 (or, a copy of the archive file 144), into the cache memory 132. The consumer 112 may then perform one or more actions associated with the requested data object, such as data recovery actions, relational operations (e.g., UNION or JOIN operations) and so on. In some example embodiments, the consumer 112 may be considered an active consumer when an action is currently being performed, or is to be performed, with the data associated with the consumer 112.

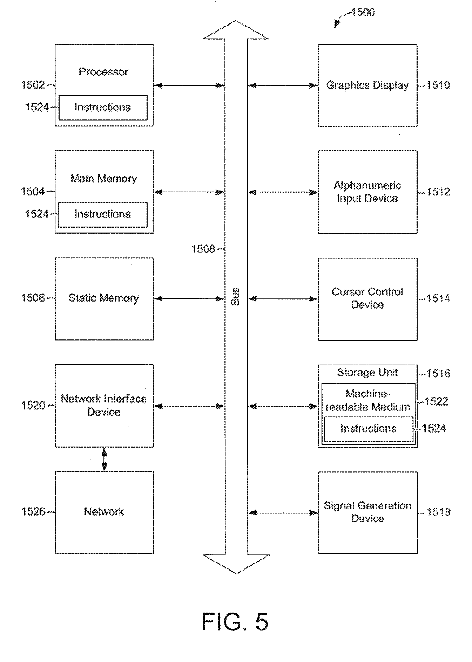

Any of the machines, databases, or devices shown in FIG. 1 may be implemented in a general-purpose computer modified (e.g., configured or programmed) by software to be a special-purpose computer to perform the functions described herein for that machine, database, or device. For example, a computer system able to implement any one or more of the methodologies described herein is discussed below with respect to FIG. 5. As used herein, a "database" is a data storage resource and may store data structured as a text file, a table, a spreadsheet, a relational database (e.g., an object-relational database), a triple store, a hierarchical data store, or any suitable combination thereof. Thus, various components of the network environment 100 may be part of, or included in, a Relational Database Management System (RDBMS), such as an RDBMS that manages data using SQL (Structured Query Language) and/or other query languages.

Moreover, any two or more of the machines, databases, or devices illustrated in FIG. 1 may be combined into a single machine, and the functions described herein for any single machine, database, or device may be subdivided among multiple machines, databases, or devices.

The database 140 may store archive files or other copies of data, such as primary or production copies of data, secondary copies of data, and so on. In some example embodiments, the archive files 142, 144, and 146 may be ADK (Archive Development Kit) files, which is an established ABAP technology, developed by SAP, Inc., used for data archiving. The system may employ ADK files to extract dormant data from growing databases, and provide long-term access to the archived data.

In some example embodiments, the system may employ ADK-based archiving, which is used for the development and administration of archiving solutions, via an Archive Development Kit (ADK) and Archive Administration (transaction SARA). The ADK and SARA are part of the standard SAP NetWeaver Application Server (SAP NW AS). The ADK is the Application Programming Interface that may be used by applications to develop archiving solutions, while the Archive Administration (transaction SARA) may be used by data archiving administrators to manage all tasks related to data archiving, including job scheduling and management, writing, reading and deletion of data, and so on.

The network 120 may be any network that enables communication between or among machines, databases, and devices. Accordingly, the network 120 may be a wired network, a wireless network (e.g., a mobile or cellular network), a storage area network (SAN), or any suitable combination thereof. The network 120 may include one or more portions of a private network, a public network (e.g., the Internet), or any suitable combination thereof.

As described herein, in some example embodiments, the cache 130 includes a cache manager 135 that is configured to manage data within the cache. For example, the cache manager 135 may identify and determine what data objects stored within the memory 132 of the cache 130 are to be maintained, what data objects are to be removed and/or deleted, and so on.

### Managing Data Within a Cache

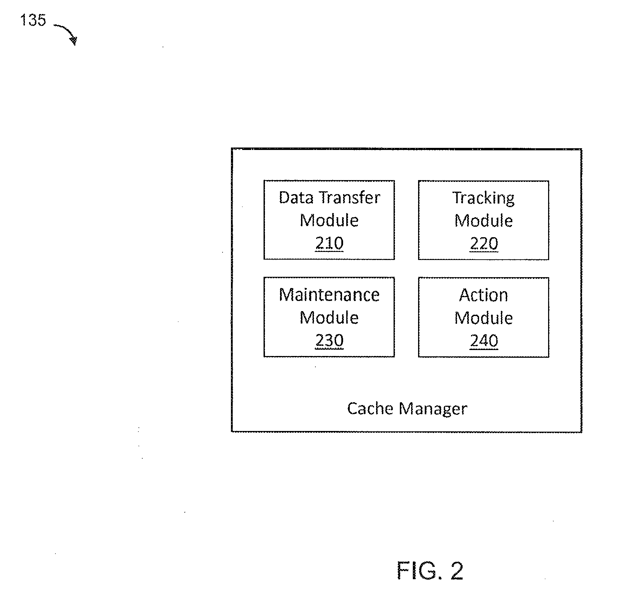

In some example embodiments, the cache manager 135 includes components and/or modules configured to manage data objects located within a cache, perform actions associated with data objects located within a cache, and so on. FIG. 2 is a block diagram illustrating components of a cache manager 135 configured to manage data within a cache, in some example embodiments.

Any one or more of the modules described herein may be implemented using hardware (e.g., a processor of a machine) or a combination of hardware and software. For example, any module described herein may configure a processor to perform the operations described herein for that module. Moreover, any two or more of these modules may be combined into a single module, and the functions described herein for a single module may be subdivided among multiple modules. Further, one of ordinary skill in the art will realize that other resources and components within the network environment 100 may include modules depicted in FIG. 2, such as stand-alone components, other components within the cache 130, and so on.

In some example embodiments, the cache manager 135 includes a data transfer module 210 that is configured and/or programmed to transfer data (or, copies of data) into the cache memory 132. For example, the data transfer module 210 may, in response to a request for a specific data object and/or specific data structure from a consumer, identify an archive file that contains the requested data, and transfer the data to the cache memory 132.

The cache manager 135 may also include, in some example embodiments, a tracking module 220 that is configured and/or programmed to track the data stored within the cache memory 132 as well as the consumers of the stored data, among other information associated with the stored data. For example, the tracking module 220 may create and/or update a table or other data structure that relates information associated with data stored within the cache memory 132 to information associated with requesting consumers of the stored data. Table 1 depicts an example data structure that may be created and/or updated by the tracking module 220:

**Table 1**

| **Archive File ID** | **Data Object ID** | **Consumer ID** |
|---|---|---|
| Archivefilel 1 | Structure1 | ConsumerA |
| Archivefilel | Structure2 | ConsumerA |
| Archivefilel1 | Structure3 | none |
| Archivefile2 | Structure3 | ConsumerB |
| Archivefile3 | Structure6 | ConsumerC |
| Archivefile3 | Structure6 | ConsumerB |
| Archivefile4 | Structure1 | none |

The table shows examples of a number of different consumers related to data objects located within a cache. For example, ConsumerA may be an active consumer of Structure1 and Structure2 located within Archivefile1, while ConsumerB may be an active consumer of Structure3 of Archivefile2. Furthermore, in cases where a single data object is requested by multiple consumers (e.g., Structure6 of Archivefile3 is associated with ConsumerB and ConsumerC), the data structure may track the multiple relationships between the consumers and the data objects, and the cache manager may maintain the archive file containing the data object until all associated consumers are fmished with the data object..

Of course, one of ordinary skill in the art will appreciate that the data structure may include various different types of data associated with consumers and data. For example, the data structure may track archive files and/or data objects that are associated with one or more consumers (such as all the archive files within Table 1 that contain data objects associated with active and/or requesting consumers), and maintain archive files or data objects that are within the data structure. The cache manager may remove any other archive files or data objects not tracked by the data structure.

In some example embodiments, the cache manager 135 includes a maintenance module 230 configured and/or programmed to maintain data stored within the cache memory 132. For example, the maintenance module 230 may maintain data stored and/or located within cache memory 132, may delete and/or otherwise remove data stored within cache memory 132, and so on.

The maintenance module 230, in some example embodiments, may determine what files or objects to maintain and/or delete from the cache memory 132 based on identifying whether there is an active consumer associated with the files or objects. The maintenance module 230 may review and/or interrogate a data structure, such as the data structure depicted in Table 1, in order to determine what files or objects are associated with, or not associated with, a consumer.

For example, the maintenance module 230 may determine, upon a review of Table 1, that Structure3 of Archivefile1 and Structure1 of Archivefile4 are not, or no longer, associated with a consumer, such as an active consumer. The maintenance module 230 may then delete Archivefile4 from the cache memory 132 because there are no consumers associated with data objects of Archivefile4. However, the maintenance module 230 may maintain Archivefilel within the cache memory 132 because other data objects (e.g., Structure1 and Structure2) are associated with an active consumer (e.g., ConsumerA).

In some example embodiments, the cache manager 135 includes an action module 240 configured and/or programmed to perform actions associated with data stored within the cache memory 132. The action module 240 may perform recovery operations, relational operations, and so on.

The action module 240 may perform, within the cache memory 132 of the cache 130, a number of different relational operations, such as operations between multiple structures of a single archive file. For example, the action module 240 may perform a JOIN between a table (e.g., #B KPF#) that stores document headers and a table (e.g., #B KEG#) that stores document lines.

In some example embodiments, both data objects (#B KPF# and #B KEG#) may be part of a single archive file, and because the cache manager 135 tracks the data objects and associated consumers, the data transfer module 210 may only perform a single transfer of the archive file that contains both data objects, avoiding redundancy and increasing performance efficiency, among other things.

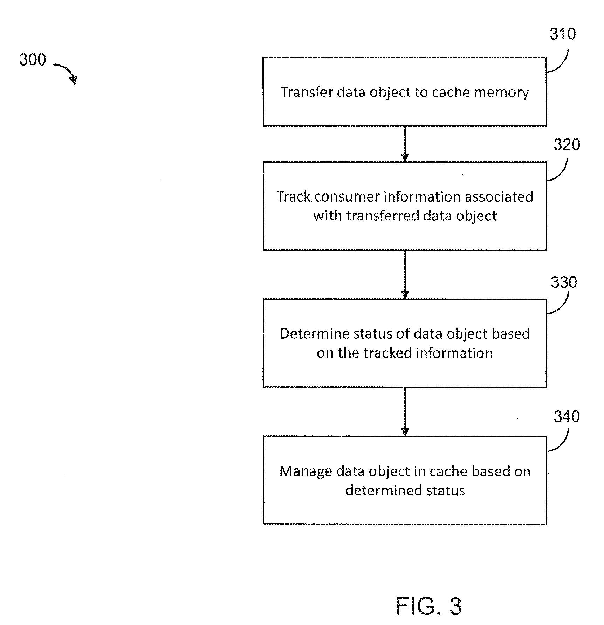

As described herein, in some example embodiments, the cache manager 135 includes various modules configured to perform methods and/or techniques associated with managing data within a cache. FIG. 3 is a flow diagram illustrating a method 300 for managing data objects located within a cache, in some example embodiments.

In operation 310, the system transfers one or more data objects to the memory of a cache. For example, the data transfer module 210 of the cache manager 135 may receive a request from a consumer to access a database 140 and transfer an archive file 142 to the memory 132 of the cache 130.

In operation 320, the system tracks consumer information associated with the transferred data object. For example, the tracking module 220 of the cache manager 135 may update a data structure that relates information associated with consumers 112, 114, and 116 of data to data stored within the memory 132 of the cache 130.

The system may track the consumer information associated with transferred data objects at various different levels of granularity. For example, the system may track an association between a consumer and an archive file, an association between a consumer and a data object, an association between a consumer and a data structure, an association between a consumer and a sequence of data blocks, and so on.

In operation 330, the system determines the status of a data object based on the tracked consumer information. For example, the maintenance module 230 of the cache manager 135 may determine a data object is to be maintained when the tracking module 220 identifies an active consumer of the data object and/or may determine a data object is to be deleted when the tracking module 220 identifies no active consumer of the data object.

In some example embodiments, the system may utilize a variety of triggers when initiating operation 330 in order to determine whether one or more data objects should be maintained and/or removed from the cache memory 132. The system may be triggered by temporal conditions (e.g., after a certain time period elapses), event-based conditions (e.g., whenever a new data object is transferred into the cache memory 132), memory size conditions (e.g., percentage of available cache memory 132) conditions that satisfy cache-specific retention policies (e.g., policies associated with locality of reference thresholds), historical memory usage conditions, and so on.

In operation 340, the system manages the data object based on the determined status of the data object. For example, the maintenance module 230 may delete the data object (or, the archive file that contains the data object) from the cache 130 when the determined status of the data object is that the data object is unassociated with a consumer, such as an active consumer. In other instances, the system may maintain the data object within the cache 130 when the determined status of the data object is that the data object is associated with an active consumer.

Therefore, in some example embodiments, the system may track associations between consumers of data objects located within the memory of a cache and the data objects themselves, and determine what data objects to maintain within the memory of the cache based on the associations, such as based on whether a data object is associated with an active consumer of data, among other things.

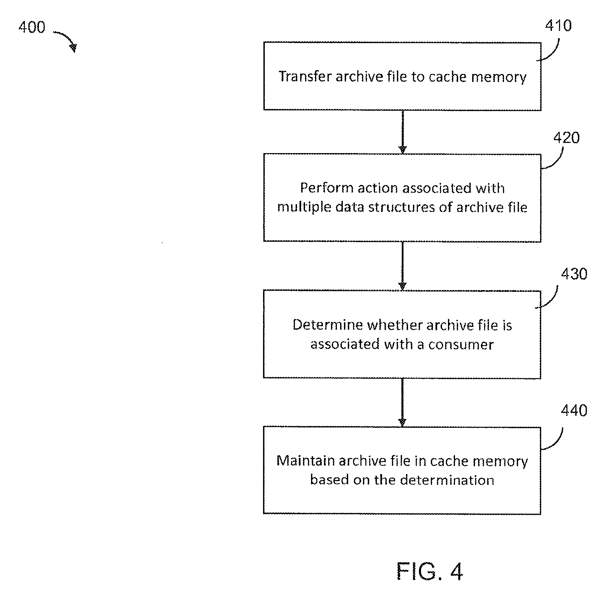

In some example embodiments, the system may perform actions with data objects within the memory of a cache, such as cache memory 132 of FIG. 1. FIG. 4 is a flow diagram illustrating a method 400 for performing actions associated with data located in a cache, in some example embodiments.

In operation 410, the system transfers an archive file to the memory of a cache. For example, the data transfer module 210 of the cache manager 135 may receive a request from a consumer to perform an action associated with a certain data object, and transfer an archive file 142 that includes the data object to the memory 132 of the cache 130.

In operation 420, the system performs an action associated with multiple data structures of the archive file. For example, the action module 240 of the cache manager 135 may perform a JOIN operation, or other relational operation, between two structures contained by the archive file.

In operation 430, the system determines whether the archive file is associated with any other consumers. For example, the maintenance module 230 of the cache manager 135 may determine that there is no tracked association, after the JOIN operation is complete, between the archive file and a consumer.

In operation 440, the system maintains the archive file based on the determination. For example, the maintenance module 230 may delete the archive file from cache memory once there is no longer a consumer associated with the archive file, or with one or more structures contained by the archive file.

Therefore, in some example embodiments, the system enables a cache to perform actions, such as relational operations, within a cache and without redundantly accessing a database for an archive file, among other benefits. That is, by tracking associations between data objects and consumers, a cache manager may perform actions between mutliple objects of a single archive file without transferring the archive file to the cache one time for every object contained by the archive file, among other things. Accordingly, redundant accessing of an archive file is avoided, which increases the performance of the system. In particular, for every new consumer an archive is only accessed if there is data missing in the cache. Further, the relational operations (e.g., UNION or JOIN operations) between the multiple structures are handled by the cache itself, such that the performance of the system is further significantly improved.

Thus, the system and methods described herein enable a system, such as a data storage system or Relational Database Management System, to efficiently manage the contents of a cache, in order to reduce performance constraints associated with the limited capacity of the cache, among other benefits.FIG. 5 is a block diagram illustrating components of a machine 1500, according to some example embodiments, able to read instructions from a machine-readable medium (e.g., a machine-readable storage medium) and perform any one or more of the methodologies discussed herein, in whole or in part. Specifically, FIG. 5 shows a diagrammatic representation of the machine 1500 in the example form of a computer system and within which instructions 1524 (e.g., software, a program, an application, an applet, an app, or other executable code) for causing the machine 1500 to perform any one or more of the methodologies discussed herein may be executed. In alternative embodiments, the machine 1500 operates as a standalone device or may be connected (e.g., networked) to other machines. In a networked deployment, the machine 1500 may operate in the capacity of a server machine or a client machine in a server-client network environment, or as a peer machine in a peer-to-peer (or distributed) network environment. The machine 1500 may be a server computer, a client computer, a personal computer (PC), a tablet computer, a laptop computer, a netbook, a web appliance, a network router, a network switch, a network bridge, or any machine capable of executing the instructions 1524, sequentially or otherwise, that specify actions to be taken by that machine. Further, while only a single machine is illustrated, the term "machine" shall also be taken to include a collection of machines that individually or jointly execute the instructions 1524 to perform any one or more of the methodologies discussed herein.

The machine 1500 includes a processor 1502 (e.g., a central processing unit (CPU), a graphics processing unit (GPU), a digital signal processor (DSP), an application specific integrated circuit (ASIC), a radio-frequency integrated circuit (RFIC), or any suitable combination thereof), a main memory 1504, and a static memory 1506, which are configured to communicate with each other via a bus 1508. The machine 1500 may further include a graphics display 1510 (e.g., a plasma display panel (PDP), a light emitting diode (LED) display, a liquid crystal display (LCD), a projector, or a cathode ray tube (CRT)). The machine 1500 may also include an alphanumeric input device 1512 (e.g., a keyboard), a cursor control device 1514 (e.g., a mouse, a touchpad, a trackball, a joystick, a motion sensor, or other pointing instrument), a storage unit 1516, a signal generation device 1518 (e.g., a speaker), and a network interface device 1520.

The storage unit 1516 includes a machine-readable medium 1522 on which is stored the instructions 1524 embodying any one or more of the methodologies or functions described herein. The instructions 1524 may also reside, completely or at least partially, within the main memory 1504, within the processor 1502 (e.g., within the processor's cache memory), or both, during execution thereof by the machine 1500. Accordingly, the main memory 1504 and the processor 1502 may be considered as machine-readable media. The instructions 1524 may be transmitted or received over a network 1526 (e.g., network 120 of FIG. 1) via the network interface device 1520.

As used herein, the term "memory" refers to a machine-readable medium able to store data temporarily or permanently and may be taken to include, but not be limited to, random-access memory (RAM), read-only memory (ROM), buffer memory, flash memory, and cache memory. While the machine-readable medium 1522 or computer-readable medium is shown in an example embodiment to be a single medium, the term "machine-readable medium" or "computer-readable medium" should be taken to include a single medium or multiple media (e.g., a centralized or distributed database, or associated caches and servers) able to store instructions 1524. The term "machine-readable medium" or "computer-readable medium" shall also be taken to include any medium, or combination of multiple media, that is capable of storing instructions (e.g., instructions 1524) for execution by a machine or computer (e.g., machine 1500), such that the instructions, when executed by one or more processors of the machine or computer (e.g., processor 1502), cause the machine or computer to perform any one or more of the methodologies described herein. Accordingly, a "machine-readable medium" refers to a single storage apparatus or device, as well as "cloud-based" storage systems or storage networks that include multiple storage apparatus or devices. The term "machine-readable medium" shall accordingly be taken to include, but not be limited to, one or more data repositories in the form of a solid-state memory, an optical medium, a magnetic medium, or any suitable combination thereof.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Certain embodiments are described herein as including logic or a number of components, modules, or mechanisms. Modules may constitute either software modules (e.g., code embodied on a machine-readable medium or in a transmission signal) or hardware modules. A "hardware module" is a tangible unit capable of performing certain operations and may be configured or arranged in a certain physical manner. In various example embodiments, one or more computer systems (e.g., a standalone computer system, a client computer system, or a server computer system) or one or more hardware modules of a computer system (e.g., a processor or a group of processors) may be configured by software (e.g., an application or application portion) as a hardware module that operates to perform certain operations as described herein.

In some embodiments, a hardware module may be implemented mechanically, electronically, or any suitable combination thereof. For example, a hardware module may include dedicated circuitry or logic that is permanently configured to perform certain operations. For example, a hardware module may be a special-purpose processor, such as a field programmable gate array (FPGA) or an ASIC. A hardware module may also include programmable logic or circuitry that is temporarily configured by software to perform certain operations. For example, a hardware module may include software encompassed within a general-purpose processor or other programmable processor. It will be appreciated that the decision to implement a hardware module mechanically, in dedicated and permanently configured circuitry, or in temporarily configured circuitry (e.g., configured by software) may be driven by cost and time considerations.

Accordingly, the phrase "hardware module" should be understood to encompass a tangible entity, be that an entity that is physically constructed, permanently configured (e.g., hardwired), or temporarily configured (e.g., programmed) to operate in a certain manner or to perform certain operations described herein. As used herein, "hardware-implemented module" refers to a hardware module. Considering embodiments in which hardware modules are temporarily configured (e.g., programmed), each of the hardware modules need not be configured or instantiated at any one instance in time. For example, where a hardware module comprises a general-purpose processor configured by software to become a special-purpose processor, the general-purpose processor may be configured as respectively different special-purpose processors (e.g., comprising different hardware modules) at different times. Software may accordingly configure a processor, for example, to constitute a particular hardware module at one instance of time and to constitute a different hardware module at a different instance of time.

Hardware modules can provide information to, and receive information from, other hardware modules. Accordingly, the described hardware modules may be regarded as being communicatively coupled. Where multiple hardware modules exist contemporaneously, communications may be achieved through signal transmission (e.g., over appropriate circuits and buses) between or among two or more of the hardware modules. In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions described herein. As used herein, "processor-implemented module" refers to a hardware module implemented using one or more processors.

Similarly, the methods described herein may be at least partially processor-implemented, a processor being an example of hardware. For example, at least some of the operations of a method may be performed by one or more processors or processor-implemented modules. Moreover, the one or more processors may also operate to support performance of the relevant operations in a "cloud computing" environment or as a "software as a service" (SaaS). For example, at least some of the operations may be performed by a group of computers (as examples of machines including processors), with these operations being accessible via a network (e.g., the Internet) and via one or more appropriate interfaces (e.g., an application program interface (API)).

The performance of certain of the operations may be distributed among the one or more processors, not only residing within a single machine, but deployed across a number of machines. In some example embodiments, the one or more processors or processor-implemented modules may be located in a single geographic location (e.g., within a home environment, an office environment, or a server farm). In other example embodiments, the one or more processors or processor-implemented modules may be distributed across a number of geographic locations.

Some portions of the subject matter discussed herein may be presented in terms of algorithms or symbolic representations of operations on data stored as bits or binary digital signals within a machine memory (e.g., a computer memory). Such algorithms or symbolic representations are examples of techniques used by those of ordinary skill in the data processing arts to convey the substance of their work to others skilled in the art. As used herein, an "algorithm" is a self-consistent sequence of operations or similar processing leading to a desired result. In this context, algorithms and operations involve physical manipulation of physical quantities. Typically, but not necessarily, such quantities may take the form of electrical, magnetic, or optical signals capable of being stored, accessed, transferred, combined, compared, or otherwise manipulated by a machine. It is convenient at times, principally for reasons of common usage, to refer to such signals using words such as "data," "content," "bits," "values," "elements," "symbols," "characters," "terms," "numbers," "numerals," or the like. These words, however, are merely convenient labels and are to be associated with appropriate physical quantities.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or any suitable combination thereof), registers, or other machine components that receive, store, transmit, or display information. Furthermore, unless specifically stated otherwise, the terms "a" or "an" are herein used, as is common in patent documents, to include one or more than one instance. Finally, as used herein, the conjunction "or" refers to a nonexclusive "or," unless specifically stated otherwise.

## Claims

1. A method, comprising:
transferring from a data archive first data associated with a first structure of an archive file and second data associated with a second structure of the archive file to cache memory;
tracking a consumer that requested the first structure of the archive file and the second structure of the archive file to be transferred to the cache memory;
performing, within the cache memory, a relational operation between the first data and the second data;
determining that the consumer is finished with the requested first structure and the requested second structure; and
deleting the first data and the second data from the cache memory based on the determination that the consumer is finished with the request first structure and the requested second structure.

2. The method of claim 1, wherein tracking a consumer that requested the first structure of the archive file and the second structure of the archive file to be transferred to the cache memory includes tracking the consumer via a data structure that relates consumers of data stored in the cache memory with the data stored in the cache memory; or
wherein tracking a consumer that requested the first structure of the archive file and the second structure of the archive file to be transferred to the cache memory includes tracking the consumer via a data structure that relates consumers of data stored in the cache memory with the data stored in the cache memory, and that is located within a cache that contains the cache memory.

3. The method of claim 1 or claim 2, wherein each structure of an archive file is one or more of the following: a data object, a business object, an array, a record, a hash table, a union type, a set, a graph, a tree and any other groupings of data.

4. The method of any one of the preceding claims, wherein the relational operation is a JOIN operation; and/or
wherein the archive file is an Archive Development Kit (ADK) file.

5. The method of any one of the preceding claims, wherein the data archive is a relational database managed by a query language.

6. A computer-readable storage medium whose contents, when executed by a computing system, cause the computing system to perform operations for managing data objects stored within memory of a cache, comprising:
determining, via a cache manager located with the cache, whether a consumer of a data object stored within memory of a cache is currently utilizing the data object; and
managing the data object stored within the memory of the cache based on the determination.

7. The computer-readable storage medium of claim 6, wherein determining whether a consumer of a data object stored within memory of a cache is currently utilizing the data object includes determining that no consumer is currently utilizing the data object further comprises:
deleting the data object stored within the memory of the cache based on the determination.

8. The computer-readable storage medium of claim 6 or claim 7, wherein determining whether a consumer of a data object stored within memory of a cache is currently utilizing the data object includes determining that at least one consumer is currently utilizing the data object further comprises:
maintaining the data object stored within the memory of the cache based on the determination.

9. The computer-readable storage medium of any one of claims 6-8, wherein determining whether a consumer of the data object within the cache is currently utilizing the data object includes interrogating a data structure stored within the cache that relates consumers to data objects stored within the cache; and/or wherein determining whether a consumer of the data object within the cache is currently utilizing the data object includes interrogating a data structure stored within the cache that tracks data objects currently associated with active consumers.

10. The computer-readable storage medium of any one of claims 6-9, further comprising: determining that a new consumer of the data object stored within memory of the cache is currently utilizing the data object; and maintaining the data object stored within the memory of the cache based on the determination.

11. A cache management system, the system comprising:
a data transfer module that is configured to transfer one or more data objects into a memory component of a cache;
a tracking module located within the cache that is configured to track consumer information for each data object transferred into the memory component of the cache; and
a maintenance module that is configured to maintain the one or more data objects in the memory component of the cache based on the tracked consumer information.

12. The cache management system of claim 11, further comprising: an action module that is configured to perform an action between two or more structures of a data object within the memory component of the cache.

13. The cache management system of claim 11 or 12, wherein the maintenance module is configured to delete a data object from the memory component of the cache when consumer information for the data object is no longer tracked by the tracking module and/or
wherein the maintenance module is configured to maintain a data object within the memory component of the cache when the consumer information tracked by the tracking module indicates that the data object is associated with an active consumer of one or more data objects from the cache.

14. The cache management system of claim 13, wherein the tracking module is configured to monitor a table that relates data objects stored within the memory component of the cache to one or more active consumers of the data objects and/or
wherein the tracking module is configured to track information identifying a consumer for each data object transferred into the memory component of the cache and/or
wherein the tracking module is configured to track information identifying a consumer for each data object transferred into the memory component of the cache as well as information identifying a type of data object transferred into the memory of the cache.

15. The cache management system of any one of claims 11-14, wherein the data transfer module is configured to read requested data objects of an archive file into the memory component of the cache.
